# EUROPEAN PATENT APPLICATION

(11) **EP 4 382 190 A1**
(43) Date of publication of application: **12.06.2024**
(21) Application number: 22211432.4
(22) Date of filing: 05.12.2022
(51) Int. Cl.: B01D 53/04, B01D 53/02

(54) **BATTERY AIR DRYER, CARTRIDGE, AND BATTERY**

(71) Applicant: MANN+HUMMEL GmbH, 71636 Ludwigsburg (DE)
(72) Inventor: PAUL KALLUMGAL, Basil, 560036 Bengaluru (IN); LINHART, Jochen, 71409 Schwaikheim (DE); RAJAGOPAL, Nandakumar, 560022 Bengaluru (IN); KARUPPANAN SINGARAM, Vijaykumar, 560072 Bengaluru (IN)
(74) Representative: Mann + Hummel Intellectual Property

(57) **Abstract**

A battery air dryer for drying air within a battery housing of a battery includes a dryer housing couplable to the battery housing, a cover assembly removably couplable to the dryer housing, and including a first cover that includes an engagement element disposed on an inner surface of the first cover, and a cartridge removably insertable through the cover assembly into the dryer housing, and including a desiccant material configured to dry the air within the battery housing, the cartridge further including a lid that includes a handle extending from a surface of the lid, and the handle including a recess to which the engagement element is removably couplable. The first cover is configured to close the dryer housing in a closed state of the dryer housing, when the cartridge is inserted into the dryer housing and the engagement element is coupled to the recess.

## Description

### Technical Field

Embodiments relate to a battery air dryer, a cartridge for use in the battery air dryer, and a battery including the battery air dryer.

### Background Art

When moisture in the air in a battery housing of an electric vehicle or stationary battery condenses, the electric vehicle or stationary battery can become damaged by corrosion and can short-circuit. To avoid such damage, the air within the battery housing can be dried with a battery air dryer. The battery air dryer can be mounted inside the battery housing at manufacturing.

It is desired to correctly insert a correct cartridge including a dryer material for drying the air within the battery housing, inside a housing of the battery air dryer. This can ensure the correct functioning of the battery air dryer and/or avoid damaging the battery air dryer and/or the electric vehicle or stationary battery.

In view of the above, it is one object of the embodiments to provide an improved battery air dryer. Further objects are the provision of an improved cartridge and the provision of an improved electric vehicle or stationary battery.

### Summary

According to the embodiments, a battery air dryer for drying air within a battery housing of a battery includes a dryer housing couplable to the battery housing, a cover assembly removably couplable to the dryer housing, and including a first cover that includes an engagement element disposed on an inner surface of the first cover, and a cartridge removably insertable through the cover assembly into the dryer housing, and including a desiccant material configured to dry the air within the battery housing, the cartridge further including a lid that includes a handle extending from a surface of the lid, and the handle including a recess to which the engagement element is removably couplable. The first cover is configured to close the dryer housing in a closed state of the dryer housing, when the cartridge is inserted into the dryer housing and the engagement element is coupled to the recess.

The recess included in the handle may include a slot.

The engagement element included in the first cover may include a hook.

The dryer housing may include a fixation portion, and the cover assembly may further include a fixation element removably fixable to the fixation portion.

The cover assembly may further include a hinge pivotably attaching the first cover to the fixation element included in the cover assembly.

The cover assembly may further include a spring coupled to the hinge and to the inner surface of the first cover, the spring being configured to apply a force to the first cover so that the first cover opens the dryer housing in an open state of the dryer housing, when a force is not received by the first cover, and compress so that first cover closes the dryer housing in the closed state of the dryer housing, when the force is received by the first cover.

The cover assembly may further include one or more notches disposed in an inner side surface of the fixation element, and the lid may further include one or more radial protrusions respectively and removably insertable into the one or more notches so that the cartridge is installed in the dryer housing when the cartridge is rotated in a locking direction and the cartridge is uninstalled from the dryer housing when the cartridge is rotated in an unlocking direction.

The dryer housing may include a region disposed inside the battery housing, the region including a grid and having a hollow cylindrical shape.

The battery air dryer may further include a seal cap disposed inside the dryer housing, a second cover disposed on an end of the dryer housing that is opposite to the first cover, and a spring interposed between the second cover and the seal cap, and configured to apply a force to the seal cap so that the seal cap is at an upper axial position inside the dryer housing and seals an opening of the dryer housing, when the cartridge is uninstalled from the dryer housing, and compress so that the seal cap is at a lower axial position inside the dryer housing, when the cartridge is installed in the dryer housing.

A cartridge for use in the battery air dryer may include the desiccant material, and the lid.

A battery may include the battery housing, and the battery air dryer.

The features described above and below in conjunction with the battery air dryer according to the embodiments also apply to the cartridge according to the embodiments and to the battery according to the embodiments.

Further possible implementations or alternative solutions of the battery air dryer, the cartridge, and the battery also encompass combinations - that are not explicitly mentioned herein - of features described above or below with regard to the embodiments. The person skilled in the art may also add individual or isolated aspects and features to the most basic form of the embodiments.

### Brief Description of Drawings

Further embodiments, features and advantages of the battery air dryer, the cartridge, and the battery will become apparent from the subsequent description and dependent claims, taken in conjunction with the accompanying drawings, in which:
FIG. 1 shows an example of an electric vehicle;
FIG. 2 shows an exploded perspective view of a battery air dryer, according to embodiments;
FIG. 3 shows a perspective view of a battery, in which a cartridge is not yet installed in a dryer housing of the battery air dryer of FIG. 2;
FIG. 4 shows a perspective view of the battery, in which the cartridge is starting to be installed in the dryer housing of the battery air dryer of FIG. 2;
FIG. 5 shows a perspective view of the battery, in which the cartridge is installed in the dryer housing of the battery air dryer of FIG. 2;
FIG. 6A shows a perspective view of the battery, in which a first cover is closed over the cartridge and the dryer housing of the battery air dryer of FIG. 2; and
FIG. 6B shows a zoomed-in perspective view of the first cover of FIG. 6A.

In the figures, like reference numerals designate like or functionally equivalent elements, unless otherwise indicated.

### Detailed Description

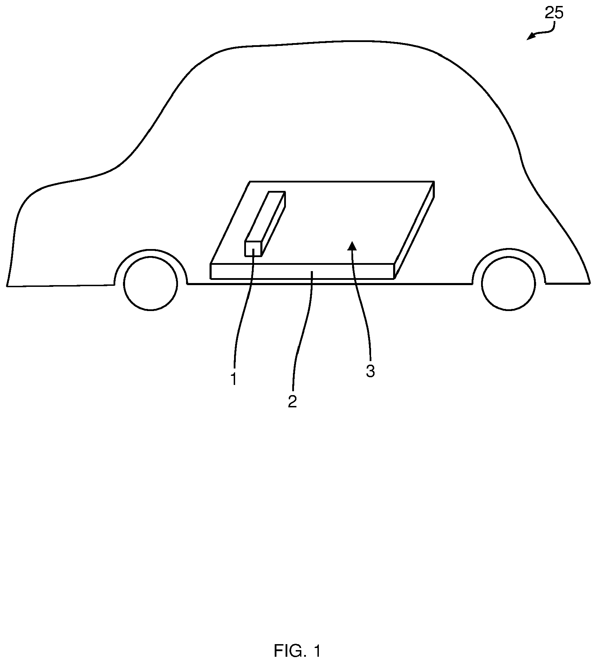

FIG. 1 shows an example of an electric vehicle 25. The electric vehicle 25 is an electric car, which is powered by an electric vehicle battery 3, also called "battery 3" in the following. In embodiments, the electric vehicle battery 3 may be a stationary battery. The electrical vehicle battery 3 can be arranged at the bottom of the electric vehicle 25. It includes battery components such as battery cells and the like (not shown) arranged within a battery housing 2.

The battery housing 2 can have a flat and substantially cuboid shape. The battery housing 2 can be about 1.5m long, 0.8m large and 0.1m high. The battery housing 2 is not hermetically sealed such that air can flow between an inside of the battery housing 2 and an outside of the battery housing 2. This air flow allows a pressure equalization between inside and outside the battery housing 2, thereby reducing an explosion risk of the battery housing 2. In particular, about 30L of free air can be present in the battery housing 2 at any time.

When the temperature of the electric vehicle battery 3 drops, for example due to weather conditions, the humidity of the air can condensate and form water within the battery housing 2. The formation of water within the battery housing 2 is undesirable because it can damage the components of the electric vehicle battery 3, for example by corrosion and/or by causing a short-circuit.

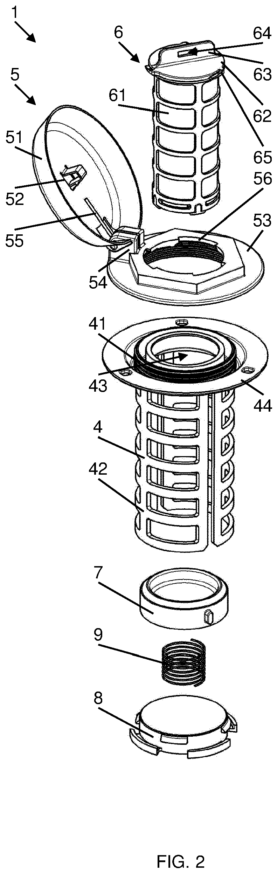

A battery air dryer 1 is provided within the battery housing 2 to dry the air inside the battery housing 2 and thereby avoid its condensation into water. The battery air dryer 1 will be described in view of FIGS. 2 to 6B in the following.

FIG. 2 shows an exploded perspective view of the battery air dryer 1, according to embodiments.

Referring to FIG. 2, the battery air dryer 1 includes a dryer housing 4, a cover assembly 5, a cartridge 6, a seal cap 7, a second cover 8, and a spring 9.

The dryer housing 4 may be made of an overmolded or connected plastic mesh in the form of a cage-like container. The dryer housing 4 includes a fixation portion 41 adjacent a top end or surface of the dryer housing 4. In embodiments, the fixation portion 41 may include threading along an outer side surface of the dryer housing 4.

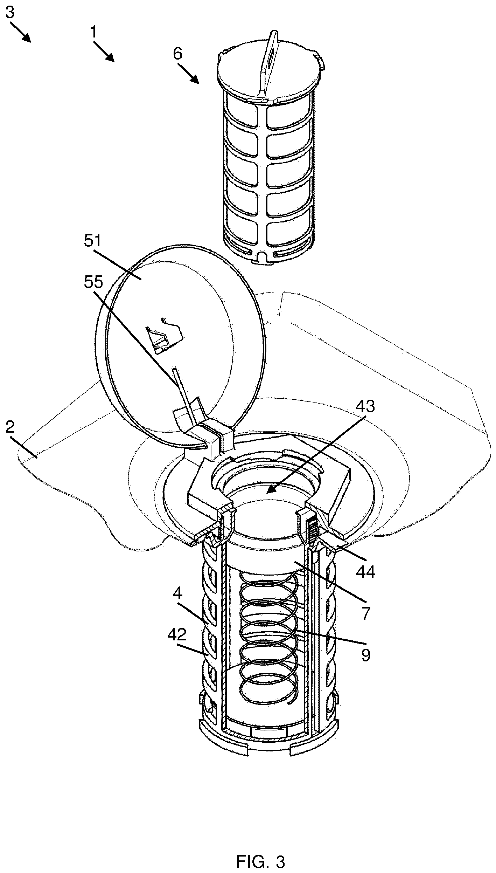

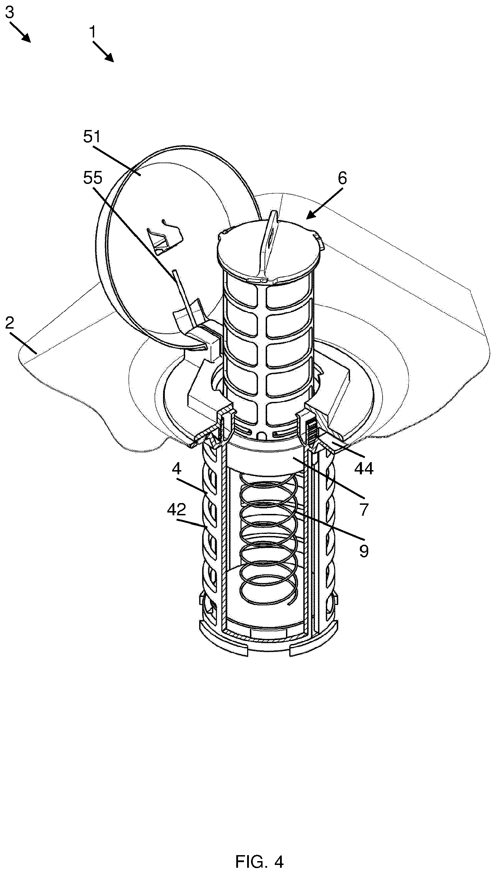

FIG. 3 shows a perspective view of the battery 3, in which the cartridge 6 is not yet installed in the dryer housing 4 of the battery air dryer 1 of FIG. 2. FIG. 4 shows a perspective view of the battery 3, in which the cartridge 6 is starting to be installed in the dryer housing 4 of the battery air dryer 1 of FIG. 2.

Referring to FIGS. 3 and 4, the dryer housing 4 further includes a region 42 disposed inside the battery housing 2. The region 42 includes a grid and may have a hollow cylindrical shape. Recesses of the grid allow the air inside the battery housing 2 to flow into an open interior of the dryer housing 4.

Referring again to FIG. 2, the dryer housing 4 further includes an opening 43 adjacent to the top end or surface of the dryer housing 4, into which the cartridge 6 is insertable. The dryer housing 4 also includes an extension portion 44 extending radially from the outer side surface of the dryer housing 4.

Referring again to FIGS. 3 and 4, the dryer housing 4 is couplable to the battery housing 2. A top surface of the extension portion 44 of the dryer housing 4 and an inner surface of the battery housing 2 may be welded, snapped, rivetted or glued together.

Referring again to FIG. 2, the cover assembly 5 is removably couplable to the dryer housing 4. The cover assembly 5 includes a first cover 51 including an engagement element 52 disposed on an inner surface of the first cover 51. The first cover 51 may include a cylindrical shape. In embodiments, the engagement element 52 may include a hook. The first cover 51 and the engagement element 52 may be made of single-molded plastic.

Further, the cover assembly 5 includes a fixation element 53 removably fixable to the fixation portion 41 of the dryer housing 4. The fixation element 53 includes an opening through a surface of the fixation element 53, and may have a cylindrical shape. In embodiments, the fixation element 53 may include threading screwable to that of the fixation portion 41, and the threading of the fixation element 53 may be along an inner side surface of the fixation element 53. The cover assembly 5 also includes a hinge 54 pivotably attaching the first cover 51 to the fixation element 53. The fixation element 53 and the hinge 54 may be made of single-molded plastic.

Further, the cover assembly 5 includes a spring 55 coupled to the hinge 54 and to the inner surface of the first cover 51. The spring 55 may be made of metal. The cover assembly 5 also includes one or more notches 56 disposed in the inner side surface of the fixation element 53.

Referring again to FIGS. 3 and 4, the spring 55 is configured to apply a force to the first cover 51 so that the first cover 51 opens the dryer housing 4 in an open state of the dryer housing 4, when a force is not received by the first cover 51.

Referring again to FIG. 2, the cartridge 6 is replaceable and removably insertable through the opening of the cover assembly 5 and the opening 43 of the dryer housing 4 into the dryer housing 4. The cartridge 6 includes a grid and may have a hollow cylindrical shape. Recesses of the grid allow the air inside the dryer housing 4 to flow into an open interior of the cartridge 6. The grid may be made of single-molded plastic. The cartridge 6 includes a desiccant material 61 configured to dry the air within the battery housing 2. The desiccant material 61 may be silica gel.

Further, the cartridge 6 includes a lid 62 including a handle 63 extending from a surface of the lid 62. The lid 62 may have a cylindrical shape, and the lid 62 and the handle 63 may be made of single-molded plastic. The handle 63 includes a recess 64 to which the engagement element 52 of the cover assembly 5 is removably couplable. In embodiments, the recess 64 may include a slot into which the hook included in the engagement element 52 is insertable.

Further, the lid 62 includes one or more radial protrusions 65 respectively and removably insertable into the one or more notches 56 of the cover assembly 5 so that the cartridge 6 is installed in the dryer housing 4 when the cartridge 6 is rotated in a locking direction (e.g., clockwise) and the cartridge 6 is uninstalled from the dryer housing 4 when the cartridge 6 is rotated in an unlocking direction (e.g., counterclockwise). The one or more radial protrusions 65 protrude from an outer side surface of the lid 62.

The seal cap 7 is disposed inside the open interior of the dryer housing 4. The seal cap 7 may have a cylindrical shape and may be made of single-molded plastic.

The second cover 8 is disposed on a bottom end or surface of the dryer housing 4 that is opposite to the first cover 51 of the cover assembly 5. The second cover 8 may have a cylindrical shape and may be made of single-molded plastic.

The spring 9 is interposed between the second cover 8 and the seal cap 7. The spring 9 may be made of metal.

Referring again to FIGS. 3 and 4, the spring 9 is configured to apply a force to the seal cap 7 so that the seal cap 7 is at an upper axial position inside the dryer housing 4 and seals the opening 43 of the dryer housing 4, when the cartridge 6 is uninstalled from the dryer housing 4. Advantageously, the dryer housing 4 may be sealed from water and contaminants from an environment outside the dryer housing 4 and the battery housing 2 and from an exchange of air between an inner side of the battery 3 and the environment.

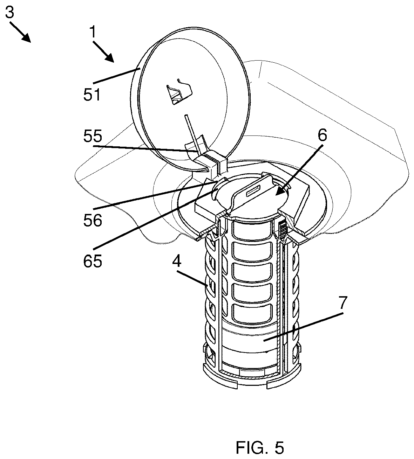

FIG. 5 shows a perspective view of the battery 3, in which the cartridge 6 is installed in the dryer housing 4 of the battery air dryer 1 of FIG. 2.

Referring to FIG. 5, the spring 55 is configured to apply the force to the first cover 51 so that the first cover 51 opens the dryer housing 4 in the open state of the dryer housing 4, when the force is not received by the first cover 51.

The spring 9 (not shown) is configured to compress so that the seal cap 7 is at a lower axial position inside the dryer housing 4, when the cartridge 6 is installed in the dryer housing 4.

The one or more radial protrusions 65 of the cartridge 6 are respectively inserted into the one or more notches 56 of the cover assembly 5 so that the cartridge 6 is installed in the dryer housing 4 when the cartridge 6 is rotated in the locking direction, in this case, clockwise. Advantageously, only the correct cartridge 6 including the one or more radial protrusions 65 respectively insertable into the one or more notches 56 may be installed in the dryer housing 4. Further, the insertion and rotation of the one or more radial protrusions 65 into the one or more notches 56 may better keep the cartridge 6 aligned and locked in place in the dryer housing 4.

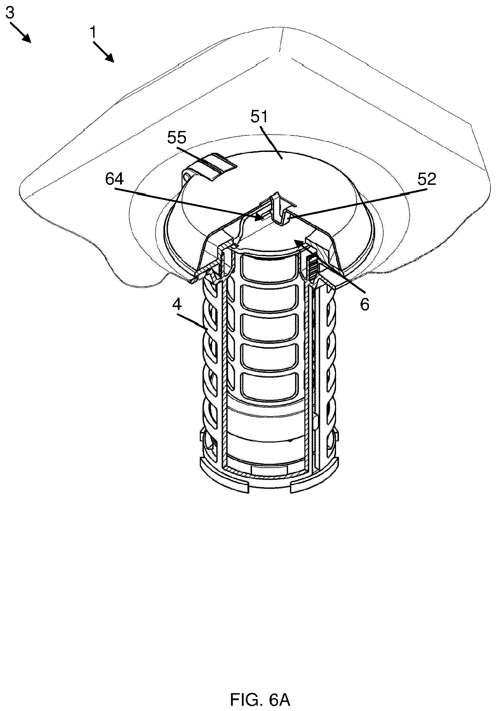

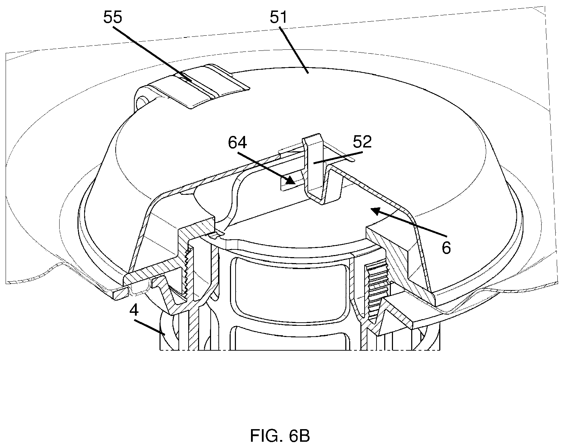

FIG. 6A shows a perspective view of the battery 3, in which the first cover 51 is closed over the cartridge 6 and the dryer housing 4 of the battery air dryer 1 of FIG. 2. FIG. 6B shows a zoomed-in perspective view of the first cover 51 of FIG. 6A.

Referring to FIGS. 6A and 6B, the first cover 51 is configured to close the dryer housing 4 in a closed state of the dryer housing 4, when the cartridge 6 is inserted into or installed in the dryer housing 4 and the engagement element 52 is coupled to the recess 64. Advantageously, only the correct cartridge 6 including the recess 64 couplable to the engagement element 52 may be installed in the dryer housing 4. Further, the coupling of the engagement element 52 to the recess 64 may better keep the first cover 51 closed over the dryer housing 4.

The spring 55 is configured to compress so that first cover 51 closes the dryer housing 4 in the closed state of the dryer housing 4, when the force is received by the first cover 51. The spring 55 is configured to decompress and reapply the force to the first cover 51 so that the first cover 51 reopens the dryer housing 4 in the open state of the dryer housing 4, when the force is again received by the first cover 51 while the first cover 51 closes the dryer housing 4 in the closed state.

It is obvious for the person skilled in the art that modifications are possible in all embodiments. For example, the plastic-molded parts of the battery air dryer 1 may instead be metal parts. In another example, the engagement element 52 of the cover assembly 5 and the recess 64 of the cartridge 6 may respectively include bayonet connections couplable to each other.

### Reference Numbers

- 1: battery air dryer
- 2: battery housing
- 3: battery
- 4: dryer housing
- 5: cover assembly
- 6: cartridge
- 7: seal cap
- 8: second cover
- 9: spring
- 25: electric vehicle
- 41: fixation portion
- 42: region
- 43: opening
- 44: extension portion
- 51: first cover
- 52: engagement element
- 53: fixation element
- 54: hinge
- 55: spring
- 56: notches
- 61: desiccant material
- 62: lid
- 63: handle
- 64: recess
- 65: radial protrusions

## Claims

1. A battery air dryer (1) for drying air within a battery housing (2) of a battery (3), the battery air dryer (1) comprising:
a dryer housing (4) couplable to the battery housing (2);
a cover assembly (5) removably couplable to the dryer housing (4), and comprising a first cover (51) that comprises an engagement element (52) disposed on an inner surface of the first cover (51); and
a cartridge (6) removably insertable through the cover assembly (5) into the dryer housing (4), and comprising a desiccant material (61) configured to dry the air within the battery housing (2), the cartridge (6) further comprising a lid (62) that comprises a handle (63) extending from a surface of the lid (62), and the handle (63) comprising a recess (64) to which the engagement element (52) is removably couplable,
wherein the first cover (51) is configured to close the dryer housing (4) in a closed state of the dryer housing (4), when the cartridge (6) is inserted into the dryer housing (4) and the engagement element (52) is coupled to the recess (64).

2. The battery air dryer (1) of claim 1, wherein the recess (64) comprised in the handle (63) comprises a slot.

3. The battery air dryer (1) of claim 1 or 2, wherein the engagement element (52) comprised in the first cover (51) comprises a hook.

4. The battery air dryer (1) of any of claims 1 to 3, wherein the dryer housing (4) comprises a fixation portion (41), and
the cover assembly (5) further comprises a fixation element (53) removably fixable to the fixation portion (41).

5. The battery air dryer (1) of claim 4, wherein the cover assembly (5) further comprises a hinge (54) pivotably attaching the first cover (51) to the fixation element (53) comprised in the cover assembly (5).

6. The battery air dryer (1) of claim 5, wherein the cover assembly (5) further comprises a spring (55) coupled to the hinge (54) and to the inner surface of the first cover (51), the spring (55) being configured to:
apply a force to the first cover (51) so that the first cover (51) opens the dryer housing (4) in an open state of the dryer housing (4), when a force is not received by the first cover (51); and
compress so that first cover (51) closes the dryer housing (4) in the closed state of the dryer housing (4), when the force is received by the first cover (51).

7. The battery air dryer (1) of claim 4, wherein the cover assembly (5) further comprises one or more notches (56) disposed in an inner side surface of the fixation element (53), and
the lid (62) further comprises one or more radial protrusions (65) respectively and removably insertable into the one or more notches (56) so that the cartridge (6) is installed in the dryer housing (4) when the cartridge (6) is rotated in a locking direction and the cartridge (6) is uninstalled from the dryer housing (4) when the cartridge (6) is rotated in an unlocking direction.

8. The battery air dryer (1) of any of claims 1 to 7, wherein the dryer housing (4) comprises a region (42) disposed inside the battery housing (2), the region (42) comprising a grid and having a hollow cylindrical shape.

9. The battery air dryer (1) of any of claims 1 to 8, further comprising:
a seal cap (7) disposed inside the dryer housing (4);
a second cover (8) disposed on an end of the dryer housing (4) that is opposite to the first cover (51); and
a spring (9) interposed between the second cover (8) and the seal cap (7), and configured to:
apply a force to the seal cap (7) so that the seal cap (7) is at an upper axial position inside the dryer housing (4) and seals an opening (43) of the dryer housing (4), when the cartridge (6) is uninstalled from the dryer housing (4); and
compress so that the seal cap (7) is at a lower axial position inside the dryer housing (4), when the cartridge (6) is installed in the dryer housing (4).

10. A battery (3) comprising:
the battery housing (2); and
the battery air dryer (1) of any one of claims 1 to 9.

11. A cartridge (6) for use in a battery air dryer (1) within a battery housing (2) of a battery (3), the cartridge (6) comprising:
a desiccant material (61) configured to dry the air within the battery housing (2); and
a lid (62) comprising a handle (63) extending from a surface of the lid (62), the handle (63) comprising a recess (64),
wherein the cartridge (6) is removably insertable through a cover assembly (5) comprised in the battery air dryer (1) and into a dryer housing (4) comprised in the battery air dryer (1), the dryer housing (4) being couplable to the battery housing (2), and the cover assembly (5) being removably couplable to the dryer housing (4),
the cover assembly (5) comprising a first cover (51) that comprises an engagement element (52) disposed on an inner surface of the first cover (51) and removably couplable to the recess (64), and
the first cover (51) is configured to close the dryer housing (4) in a closed state of the dryer housing (4), when the cartridge (6) is inserted into the dryer housing (4) and the engagement element (52) is coupled to the recess (64).
